# EUROPEAN PATENT SPECIFICATION

(11) **EP 3 014 826 B1**
(45) Date of publication and mention of the grant of the patent: **21.02.2018**
(21) Application number: 14817513.6
(22) Date of filing: 26.06.2014
(51) Int. Cl.: H04L 12/891, H04L 12/801, H04L 12/64, H04L 12/24, H04L 12/709, H04L 12/703, H04L 12/715, H04L 12/70, H04L 12/935

(54) **LINK AGGREGATION**
VERKNÜPFUNGSAGGREGATION
AGRÉGATION DE LIENS

(30) Priority: 28.06.2013 CN 201310268215
(43) Date of publication of application: 04.05.2016
(73) Proprietor: Hewlett Packard Enterprise Development LP, Houston, TX 77070 (US)
(72) Inventor: WU, Qiang, Beijing 100085 (CN)
(74) Representative: Holt, Daniel Richard
(86) International application number: PCT/CN2014/080786
(87) International publication number: WO 2014/206307

(56) References cited:
- WO-A1-2012/050071
- WO-A1-2013/022082
- CN-A- 101 964 746
- CN-A- 102 224 707
- CN-A- 103 051 629
- INTERWORKING TASK GROUP OF IEEE 802 1: "Link Aggregation - Amendment: Distributed Resilient Network Interconnect ; 802-1AXbq-d0-4", IEEE DRAFT; 802-1AXBQ-D0-4, IEEE-SA, PISCATAWAY, NJ USA, vol. 802.1, no. d0-4, 4 November 2011 (2011-11-04), pages 1-102, XP017653637, [retrieved on 2011-11-04]

## Description

### BACKGROUND

In order to satisfy the demands of the market, a Software Defined Network (SDN) may be developed. The SDN may have a new network architecture. In the SDN, control and forwarding operations of the network may be physically separated and applications for a control layer may be developed. Control functions executed by network devices in the conventional network may be executed by accessible computing devices and forwarding functions may be executed by basic network devices. The whole SDN may be taken as a logical or virtual unity. Document WO2013/022082 A1 describes a packet forwarding system comprising first relay apparatuses that are connected to each other; a second relay apparatus that is connected to first relay apparatuses; and a control apparatus that configures trunk serving as virtual logical link by using physical links among first and second relay apparatuses. The packet forwarding system causes relay apparatuses to appropriately forward predetermined control target packets such as broadcast packets or multicast packets. Document WO2012/050071 A1 describes a communication system comprising a trunk port management unit that manages a trunking link in a network, and a path control unit that determines whether or not to use the trunking link, and in case of using the trunking link selects it according to a prescribed rule. The control device calculates a packet forwarding path including the selected link, and sets a processing rule to implement the packet forwarding path.

### BRIEF DESCRIPTION OF THE DRAWINGS

Figure 1 is a flow chart illustrating a link aggregation method in accordance with an example of the present disclosure;
Figure 2 is a flow chart illustrating another link aggregation method in accordance with an example of the present disclosure;
Figure 3 is a schematic diagram illustrating structure of a network formed by a network device and SDN edge devices in accordance with an example of the present disclosure;
Figure 4 is a schematic diagram illustrating structure of a device in accordance with an example of the present disclosure;
Figure 5 is a schematic diagram illustrating structure of another device in accordance with an example of the present disclosure;
Figure 6 is a schematic diagram illustrating hardware architecture of the device in figure 4; and
Figure 7 is a schematic diagram illustrating hardware architecture of the device in figure 5.

### DETAILED DESCRIPTION

For simplicity and illustrative purposes, the present disclosure is described by referring mainly to example(s) thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. As used throughout the present disclosure, the term "includes" means includes but not limited to, the term "including" means including but not limited to. The term "based on" means based at least in part on. In addition, the terms "a" and "an" are intended to denote at least one of a particular element.

The whole SDN may be controlled by a logic point, which may simplify the design and operation of the SDN. A network control unit and a network decision unit may be set on an SDN controller. The SDN controller may control the whole SDN from an overall point of view. The whole SDN may be taken as a logical switch. A network forwarding device may execute various forwarding-related instructions sent out by the SDN controller and report its status, such as failed, to the SDN controller. Without processing various network protocols and standards, the implementation of the network device may be simplified by receiving instructions from the SDN controller and executing the instructions.

With the evolution of the SDN and successful operation of an experimental network, the network architecture of the SDN may be one of widely-adopted network architecture in the future. As the SDN coexists with the traditional network and gradually replaces the traditional network, how to make the SDN interface smoothly with the traditional network becomes an important consideration.

An example of the present disclosure provides a link aggregation method, applied to an SDN controller in a SDN. According to Link Aggregation Control Protocol (LACP) packets from an SDN edge device, the SDN controller may select ports as selected ports of an aggregation group from among ports on the SDN edge device that have received the LACP packets with a configured aggregation strategy. The SDN controller may inform the network device of the SDN edge device, at which the selected ports are located, so as to cause the network device to negotiate with the SDN edge device to complete a link aggregation. The method for informing the network device may include the SDN controller sending LACP packets to the network device, the number of LACP packets sent by the SDN controller being the same as the number of selected ports of the aggregation group. According to an example of the present disclosure, an SDN device which may directly connect with the network device outside of the SDN may be called the SDN edge device. A device outside of the SDN, i.e., the device in the traditional network may be called the network device. According to an example of the present disclosure, the SDN edge device may receive LACP packets from the network device. Ports receiving the LACP packets may be member ports of a corresponding aggregation group. Ports selected from the ports receiving the LACP packets may be selected ports of the aggregation group.

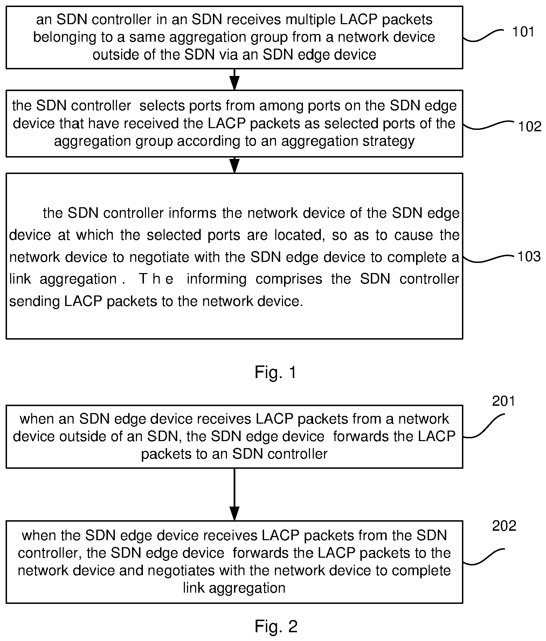

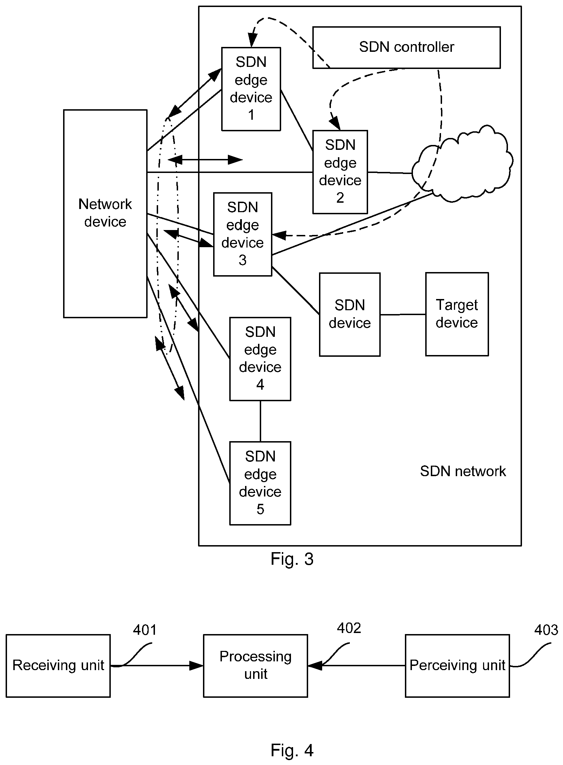

Figure 3 shows an example of an SDN network including an SDN controller and a plurality of SDN devices. A network device outside of the SDN connects to the SDN. The SDN devices in the SDN which connect to the network device outside of the SDN network are called "SDN edge devices". A link aggregation may be set up between ports of the network device and ports of some or all of the SDN edge devices. Figure 3 is described in more detail later, but first a link aggregation method will be described with reference to Figure 1 and Figure 2

Referring to figure 1, figure 1 is a flow chart illustrating a link aggregation method from the perspective of an SDN controller in accordance with an example of the present disclosure. As shown in figure 1, the method may include following blocks.

In block 101, an SDN controller in an SDN may receive multiple LACP packets which may be forwarded by an SDN edge device and belong to a same aggregation group.

In this block, the multiple LACP packets may be sent from a network device outside of the SDN. After the SDN edge device receives the LACP packets, the SDN edge device may forward the LACP packets to the SDN controller.

In the traditional network outside of the SDN, after a port of the network device initiates the LACP protocol, the port may send the LACP packet to a port on a peer device to report information, such as a system priority, a system Media Access Control (MAC) address, a port priority, port number and an operation key of the port of the network device to the port on the peer device. After receiving the information, the peer device may compare the information with information saved by other ports to select ports which may join in the aggregation group. Therefore, the network device and the peer device may agree on which port may join in or exit the aggregation group.

In the SDN, after the SDN edge device receives the LACP packets, the SDN edge device may forward the LACP packets to the SDN controller. The SDN controller may select ports which may join in the aggregation group and take the ports as the selected ports of the aggregation group.

The SDN controller may receive the LACP packets from multiple SDN edge devices and determine whether the LACP packets belong to a same aggregation group according to keys in the LACP packets. If the LACP packets do not belong to the same aggregation group, the SDN controller may determine that the ports receiving the LACP packets should not be aggregated. As for the LACP packets belonging to the same aggregation group, the SDN controller may determine whether the ports, which may be located at the SDN edge device and may be used for receiving the LACP packets, should be taken as the selected ports of the aggregation group according to contents in the LACP packets.

The SDN controller may obtain that an LACP packet may be received by which port of the SDN edge device forwarding the LACP packet according to a protocol packet in the SDN.

The network device may perform link aggregation with an SDN edge device. Alternatively, the network device may perform link aggregation with multiple SDN edge devices, which may be called cross-device aggregation. Therefore, the LACP packets may be forwarded by one or multiple SDN edge devices.

In block 102, the SDN controller may select ports from the ports on the SDN edge device for receiving the LACP packets as selected ports of the aggregation group according to an aggregation strategy.

If the SDN controller receives the multiple LACP packets belonging to the same aggregation group from different SDN edge devices, the SDN controller may select one SDN edge device from the SDN edge devices forwarding the multiple LACP packets as a central reference point, select SDN edge devices connecting with the central reference point and take ports, which may be located at the SDN edge devices and receive the LACP packet from the network device, as the selected ports of the aggregation group.

The LACP packets, the number of which may be the same as that of the selected ports, sent from the SDN controller may carry a same system ID. Since the same system ID may be carried, the peer device may take the devices in the SDN as one device.

The SDN controller may select one SDN edge device by using any appropriate method and take the selected SDN edge device as the central reference point.

For instance, the SDN controller may select one SDN edge device, which may connect with most SDN edge devices, from the SDN edge devices forwarding the LACP packets of the aggregation group and take the selected SDN edge device as the central reference point. In another example, the SDN controller may select one SDN edge device according to how busy the traffic of the ports receiving the LACP packets is or how busy the traffic of the SDN edge devices forwarding the LACP packets of the aggregation group is and take the selected SDN edge device as the central reference point. In another example, the SDN controller may select one SDN edge device according to aggregation priorities of ports receiving the LACP packets and speed duplex, etc., and take the selected SDN edge device as the central reference point.

If the SDN controller receives the multiple LACP packets belonging to the same aggregation group from the same SDN edge device, i.e., the network device needs to perform link aggregation with the SDN edge device via different ports, the SDN controller may implement the cross-device aggregation according to a cross-device aggregation strategy. When the central reference point is selected, the SDN edge device, at which other ports of the aggregation group may be located, may connect with the SDN edge device, at which the central reference point may be located.

In block 103, the SDN controller may inform the network device of the SDN edge device at which the selected ports are located, so as to cause the network device to negotiate with the SDN device to complete the link aggregation. The SDN controller may inform the network device by sending LACP packets to the network device.

According to an example, the number of the LACP packets may be the same as the number of the selected ports.

The LACP packets sent from the SDN controller to the network device may carry the selected ports of the aggregation group. The SDN controller may forward the LACP packets to the network device via an SDN edge device.

When the network device receives the LACP packets forwarded by the SDN edge device, the network device may view status of local ports according to the selected ports in the LACP packets, select the selected ports of the aggregation group at local and send a message carrying the selected ports to the SDN edge device.

The SDN edge device may configure the ports selected by the SDN edge device and the network device, such as configure a selection identity, according to the message. The SDN edge device may configure status of unselected ports as a blocked status. Alternatively, the SDN edge device may not do any processing on the unselected ports. The SDN controller may not designate a data forwarding path and a data forwarding rule for the unselected ports.

Referring to figure 2, figure 2 is a flow chart illustrating another link aggregation method in accordance with an example of the present disclosure. As shown in figure 2, the method may include following blocks.

In block 201, when an SDN edge device receives LACP packets from a network device outside of an SDN, the SDN edge device may forward the LACP packets to an SDN controller.

In block 202, when the SDN edge device receives LACP packets from the SDN controller, the SDN edge device may forward the LACP packets to the network device and negotiate with the network device to complete link aggregation.

In this block, the LACP packet sent from the SDN controller may indicate that the SDN controller may designate ports on the SDN edge device which have received LACP packets from the network device as selected ports of an aggregation group according to a configured aggregation strategy.

When the SDN controller receives multiple LACP packets belonging to the same aggregation group from the SDN edge device, the SDN controller may determine whether to perform aggregation according to the aggregation strategy and send information of selected ports of the aggregation group to the network device via LACP packets.

When the selected ports of the aggregation group are located at the SDN edge device, the SDN edge device may receive LACP packets, the number of which may be the same as that of the selected ports of the SDN edge device from the SDN controller and send the LACP packets from the SDN controller to the network device. When the selected ports of the aggregation group are located at the SDN edge device and other SDN edge devices, each of the SDN edge device and the other SDN edge devices may receive an LACP packet carrying a same system ID. Therefore, the network device may determine that the multiple LACP packets in the aggregation group may be sent from a same device in the same SDN.

The same system ID may be the system ID of an SDN edge device or may be allocated by the SDN controller.

According to an example, when the aggregation link between the network device and the SDN edge device fails or when the SDN edge device disconnects with the SDN, the processing procedure may be described hereinafter.

When the SDN controller determines that any selected port in the aggregation group fails, the SDN controller may inform the network device that the selected port may be unselected and inform the SDN edge device, at which the selected port may be located, to configure the selected port as a non-selected port. The SDN controller may for example determine that a selected port has failed by passively being notified or actively making a determination, for instance the SDN controller may receive a notification from an SDN device indicating that a select port has failed, or may determine that a port has failed by monitoring the SDN for evidence of failed ports etc.

The SDN edge device may delete a selection identifier configured for the selected port or block the selected port.

When the SDN controller determines that an SDN edge device, at which any of the selected ports in the aggregation group may be located, disconnects with the network device, the SDN controller may inform the network device that the selected ports on the SDN edge device may be unselected. The SDN controller may for example determine that an SDN edge device has disconnected from the SDN by receiving notification from an SDN device, due to not receiving a hello or other expected messages from the SDN edge device, by monitoring the SDN or by other methods.

When the network device receives a notification from the SDN controller, the network device may block the corresponding port at local and may migrate traffic forwarded by the port to another port.

If the aggregation is the cross-device link aggregation, i.e., multiple SDN edge devices aggregate with the network device, when a selected port of an SDN edge device, which is selected as a central reference point, fails or the SDN edge device disconnects with the SDN, a new central reference point should be selected. In order to ensure that the traffic may be steadily forwarded, the status of the selected ports may be maintained, which may be adjusted by the SDN controller according to the network strategy.

When the SDN controller determines that the failed port recovers or the SDN edge device reconnects with the SDN, if the SDN controller determines that the port or a port on the SDN edge device for receiving the LACP packets should be taken as the selected port of the aggregation group, the SDN controller may inform the network device via an LACP packet. Therefore, the network device may negotiate with the SDN edge device, at which the selected port may be located.

If the result of the negotiation is that the both the network device and the SDN edge device agree with selecting the port as the selected port, the network device may configure the port as the selected port and the network edge device may configure the port as the selected port. The SDN controller may compute a data forwarding path with the port.

How to receive and send a unicast packet, an unknown unicast packet, a multicast packet or a broadcast packet after the aggregation of the network device and the SDN edge device may be described in this example in detail.

The SDN controller may send the data forwarding path to the SDN edge device, at which the selected ports in the aggregation group may be located. Therefore, the SDN edge device may forward a unicast packet with the data forwarding path.

When the SDN edge device in the SDN receives the unicast packet, the SDN edge device may forward the unicast packet according to the data forwarding path sent from the SDN controller. The unicast packet may include an SDN unicast packet or a unicast packet sent from the network device.

The SDN edge device may receive an unknown unicast packet, a multicast packet or a broadcast packet from the network device or an SDN device in the SDN.

When the SDN edge device determines that the SDN controller has issued a blocking strategy of the unknown unicast packet, multicast packet or the broadcast packet and the port receiving the unknown unicast packet, multicast packet or the broadcast packet is not configured as a blocked port, the SDN edge device may send the unknown unicast packet, multicast packet or the broadcast packet according to local configuration.

When the SDN edge device determines that the SDN controller has issued the blocking strategy of the unknown unicast packet, multicast packet or the broadcast packet and the port receiving the unknown unicast packet, multicast packet or the broadcast packet is configured as the blocked port, or the SDN controller has not issued the blocking strategy of the unknown unicast packet, multicast packet or the broadcast packet, the SDN edge device may send the unknown unicast packet, multicast packet or the broadcast packet to the SDN controller. When the SDN edge device receives the blocking strategy issued by the SDN controller, the SDN edge device may configure the port receiving the unknown unicast packet, multicast packet or the broadcast packet as the blocked port and send the unknown unicast packet, multicast packet or the broadcast packet.

It may be seen that when the SDN edge device in the aggregation group receives a first unknown unicast packet, multicast packet or broadcast packet, the SDN edge device may send the unknown unicast packet, multicast packet or broadcast packet to the SDN controller and the SDN controller may issue the blocking strategy of the unknown unicast packet, multicast packet or the broadcast packet. The SDN edge device may configure the blocked port according to the blocking strategy of the unknown unicast packet, multicast packet or broadcast packet and may not send the unknown unicast packet, multicast packet or the broadcast packet via the blocked port.

If the SDN edge device receives the unknown unicast packet, multicast packet or broadcast packet sent from the network device via the blocked port, the SDN edge device may send the unknown unicast packet, multicast packet or the broadcast packet to the SDN controller again and the SDN controller may issue the blocking strategy again.

Different from the processing of the unicast packet, the network device may send out the unknown unicast packet, the multicast packet or the broadcast packet with a fixed port according to a strategy and may not perform a load balance algorithm on the unknown unicast packet, the multicast packet or the broadcast packet. If the SDN edge device receives the unknown unicast packet, the multicast packet or the broadcast packet with the blocked port, the network device may re-designate a port for sending the unknown unicast packet, multicast packet or the broadcast packet. Therefore, the received unknown unicast packet, multicast packet or broadcast packet may be sent to the SDN controller again and the SDN controller may issue the blocking strategy again according to the received unknown unicast packet, multicast packet or broadcast packet.

When the SDN controller receives the unknown unicast packet, multicast packet or broadcast packet sent from the network device via the SDN edge device, at which the selected ports of the aggregation group may be located, the SDN controller may issue the blocking strategy of the unknown unicast packet, multicast packet or the broadcast packet to the SDN edge device, at which the selected ports of the aggregation group may be located, so that the SDN edge device may configure ports besides the selected port of the aggregation group for receiving the unknown unicast packet, multicast packet or broadcast packet as the blocked ports of the unknown unicast packet, multicast packet or broadcast packet.

When the SDN controller receives the unknown unicast packet, multicast packet or broadcast packet sent from an SDN device in the SDN via the SDN edge device, the SDN controller may select a port from the aggregation group and take the port as the selected port for forwarding the unknown unicast packet, multicast packet or broadcast packet and the SDN edge device may set other ports in the aggregation group as the blocked ports of the unknown unicast packet, multicast packet or broadcast packet.

A packet-by-packet traffic sharing process may be described in this example in detail.

When the network device confirms that a previous packet has been correctly forwarded with a MAKER protocol, the SDN controller may select an SDN edge device from the SDN edge devices, at which the selected ports of the aggregation group may be located, and receive send the same data flow received from the selected ports to the selected SDN edge device so that the data flow may be forwarded in turn.

If the packet-by-packet traffic sharing is implemented between the network device and the SDN edge device, the MARKER protocol packet may be used for determining whether the previous data has been correctly forwarded, the forwarding operation may be performed with software to ensure that the data may be forwarded in turn, or a higher layer protocol, such as the TCP may be used to ensure that the data may be forwarded in turn.

If it is determined that the previous packet has been correctly forwarded with the MARKER protocol packet, the network device may send a MARKER packet after sending out a data packet. After receiving the MARKER packet and determining that the data packet is forwarded, the SDN edge device may make a response to the MARKER protocol packet. The network device may send a second packet of data via another port. In order to avoid that the second packet of data arrives at the target device first due to a shorter path, a special strategy may be configured in the SDN to designate that the second packet of data should be sent to a device sending the first packet of data via a path between two devices and the device sending the first packet of data may forward the second packet of data.

If the MARKER protocol packet is not interacted between devices, the sequence of forwarding may be ensured by performing the forwarding with the software in the SDN. After the SDN controller sends the packets to the same device, the device may forward the packets sequentially.

As for order-preserving of the high-layer protocol, the packet-by-packet balance strategy used for the order-preserving in the MAC layer may not be used. Each SDN device may perform forwarding respectively, which may be the same as the operation of the traffic-based balance.

How to implement the aggregation of the network device and multiple SDN edge devices and forward the packet after the aggregation may be described hereinafter in detail.

Referring to figure 3, figure 3 is a schematic diagram illustrating structure of a network formed by a network device and SDN edge devices in accordance with an example of the present disclosure. In figure 3, the network device may apply the LACP protocol to local ports 1 to 5, aggregate the five local ports of the network device together to form an aggregation group, i.e., aggregation group 1 and send LACP packets to the SDN via the five local ports of the network device.

SDN edge device 1 to SDN edge device 5 in the SDN may respectively receive the LACP packets from the network device, forward the LACP packets to the SDN controller and send information of ports of the SDN edge devices receiving the LACP packets to an SDN controller via an internal protocol of the SDN. The SDN controller may know which ports of the SDN edge devices receive the LACP packets.

The SDN controller may receive the LACP packets forwarded by the SDN edge device 1 to SDN edge device 5 and determine that the five LACP packets belong to the same aggregation group, i.e., aggregation group 1, according to a local aggregation strategy. The SDN controller may determine whether to aggregate the five ports of the SDN edge devices according to the local aggregation strategy. The local aggregation strategy may be configured according to traffic load of a port or a device, status of an SDN device, aggregation priority of a port and connectivity with other SDN edge devices, etc. This example may be described taking the connectivity of the SDN edge device for example.

The SDN controller may take the SDN edge device connecting with most SDN edge devices as the central reference point, such as SDN edge device 2. The SDN edge device 1 and SDN edge device 3 may connect with the SDN edge device 2. Therefore, port 1 of the SDN edge device 1, port 2 of the SDN edge device 2 and port 3 of the SDN edge device 3 may be taken as selected ports of aggregation group 1. There LACP packets carrying the same system ID may be sent to the network device.

The SDN edge devices may receive the three LACP packets sent from the SDN controller to the network device and forward the three LACP packets to the network device.

When the network device receives the three LACP packets, the network device may check status of a local port 1 of the network device corresponding to the port 1 of the SDN edge device 1, a local port 2 of the network device corresponding to the port 2 of the SDN edge device 2 and a local port 3 of the network device corresponding to the port 3 of the SDN edge device, determine that the local port 1 to local port 3 of the network may be the selected ports according to the status of the local ports of the network device and configure status of a local port 4 and a local port 5 of the network device as a block status. The network device may send a message to inform the SDN edge device 1, SDN edge device 2 and SDN edge device 3.

The SDN edge devices 1 to 3 may configure the ports selected by the network device and the SDN edge devices 1 to 3 as the selected ports according to the message from the network device and configure status of the unselected ports as the blocking status. The cross-device link aggregation may be completed.

If the selected port of the SDN edge device 1, i.e., the port 1 of the SDN edge device 1, fails, the SDN controller may obtain that the port 1 of the SDN edge device 1 fails and inform the network device that the port 1 of the SDN edge device 1 may be unselected via a packet. The SDN edge device 1 may configure the port 1 of the SDN edge device 1 as the unselected port or block the port 1 of the SDN edge device 1.

When the network device receives the packet from the SDN controller indicating that the port 1 of the SDN edge device 1 may be unselected, the network device may configure the local port 1 of the network device corresponding to the port 1 of the SDN edge device 1 as the unselected port.

If the SDN edge device 2 disconnects with the SDN, the SDN controller may inform the network device that the port 2 of the SDN edge device 2 may be unselected via an LACP packet. The SDN edge device 2 may configure the port 2 of the SDN edge device 2 as the unselected port. The network device may make the traffic sent via the local port 2 of the network device migrate to another member port.

When a selected port fails or an SDN edge device disconnects with the SDN, a new port may be selected as the selected port of the aggregation group 1. When the central reference point is re-calculated, in order to ensure that the traffic may be steadily forwarded, the status of the selected ports may be maintained, which may be adjusted by the SDN controller according to the network strategy.

When a failed port recovers, the processing method may be similar as that mentioned above. For instance, when the SDN edge device 4, at which the port 4 may be located, in figure 3 re-connects with the SDN, the SDN controller may determine to configure the port 4 of the SDN edge device 4 as the selected port according to the status of the current selected ports and inform the network device to negotiate with the SDN edge device via an LACP packet. If both the network device and the SDN edge device agree with configuring the port 4 of the SDN edge device 4 as the selected port, the network device may configure the local port 4 of the network device as the selected port of the aggregation group. In the SDN, the port 4 of the SDN edge device 4 may be configured as the selected port and the traffic forwarding function of the port 4 of the SDN edge device 4 may be configured.

When the network device sends unicast traffic to the SDN edge device via the selected port according to a balance mode, the SDN edge device may forward the unicast traffic to a next-hop device according to a data forwarding path issued by the SDN controller.

The network device may send known unicast traffic to the SDN edge device 1 via the selected port 1 of the network device. The SDN edge device 2 may forward the unicast traffic to a target device according to the data forwarding path issued by the SDN controller. Downlink traffic from the target device to the network device may be forwarded according to the data forwarding path issued by the SDN controller. The downlink traffic may be sent out via the port 1 of the SDN edge device 1, the port 2 of the SDN edge device 2 or the port 3 of the SDN edge device 3. If the downlink traffic may be sent to the opposite-end via the selected port, the opposite-end may correctly process the downlink traffic.

The network device may send out unknown unicast traffic, multicast traffic and/or broadcast traffic via a fixed member port according to a strategy. When the selected port of the aggregation group of the SDN edge device receives the first broadcast packet of the aggregation group, the SDN edge device, at which the selected port may be located, may send the broadcast packet to the SDN controller. The SDN controller may configure the blocking strategy of the broadcast traffic according to the broadcast packet.

The SDN edge device 2 may receive a broadcast packet via the port 2 of the SDN edge device 2 and send the broadcast packet to the SDN controller. The SDN controller may configure that the port 1 of the SDN edge device land the port 3 of the SDN edge device 3 may not be used for forwarding the broadcast traffic. Therefore, the broadcast packet received by the SDN edge device 2 may not be sent to the network device via the port 1 of the SDN edge device 1 or the port 3 of the SDN edge device 3. The diffusion strategy of the broadcast packet in the SDN may be determined by the forwarding strategy of the SDN.

It may be assumed that the SDN edge device 3 receives the broadcast packet from the SDN, the broadcast packet may not be sent to the network device via the port 3 of the SDN edge device 3 or the port 1 of the SDN edge device 1. The broadcast packet may be sent to the network device via the port 2 of the SDN edge device 2.

When a port of the aggregation group changes, the network device may re-select another port and send the broadcast packet via the re-selected member port. When the SDN edge device receives the broadcast packet via a blocked port, the SDN edge device may send the broadcast packet to the SDN controller. The SDN controller may receive a message according to the broadcast packet and re-adjust a broadcast traffic blocking strategy.

As shown in figure 3, the SDN edge device 3 may receive the broadcast packet from the network device and send the broadcast packet to the SDN controller. The SDN controller may re-adjust the broadcast traffic blocking strategy according to the received broadcast packet. The port 2 of the SDN edge device 2 and the port 1 of the SDN edge device 1 may be configured as the blocked ports and may not be used for receiving the broadcast packet. The port 3 of the SDN edge device 3 may be unblocked and may be used for receiving the broadcast packet.

If the network device sends the first broadcast packet traffic, the SDN controller may select a port from the selected ports and take the selected port as an inhibited port of the broadcast traffic and send the broadcast packet traffic with the selected port. If a port configured as the inhibited port of the network device receives the first broadcast packet, the network device may inform the SDN controller. The SDN controller may re-configure the broadcast traffic blocking strategy.

The method for aggregating the network device and the cross-SDN edge device is similar to that for aggregating the network device and a same SDN edge device.

An example of the present disclosure may provide a device. The device may be an SDN controller in the SDN. The SDN may include: an SDN edge device and an SDN controller. The SDN edge device may be an SDN device which may directly connect with a network device outside of the SDN. Referring to figure 4, figure 4 is a schematic diagram illustrating structure a device in accordance with an example of the present disclosure. The device may include: a receiving unit 401 and a processing unit 402.

The receiving unit 401 may receive LACP packets belonging to a same aggregation group from a network device outside of an SDN via an SDN edge device.

The processing unit 402 may select ports from ports on the SDN edge device for receiving the LACP packets as selected ports of the aggregation group according to an aggregation strategy, inform the network device of the SDN edge device, at which the selected ports may be located, with LACP packets from the device so that the network device may negotiate with the SDN edge device, at which the selected ports may be located, to complete link aggregation.

According to an example, the number of the LACP packets from the device is the same as that of the selected ports.

The processing unit 402 may be further to select, when the receiving unit 401 receives the LACP packets from the network device via different SDN edge devices, an SDN edge device from the SDN edge devices forwarding the LACP packets from the network device as a central reference point, select SDN edge devices connecting with the central reference point and take the ports on the selected SDN edge devices for receiving the LACP packets from the network device as the selected ports of the aggregation group.

The LACP packets, the number of which is the same as that of the selected ports, sent from the processing unit 402 may carry a same system ID.

The device may further include a perceiving unit 403, to obtain whether the SDN edge device disconnects with the SDN and whether a selected port of the SDN edge device fails.

The processing unit 402 may be further to inform, when the perceiving unit 403 obtains that a selected port fails, the network device that the failed port may be unselected, inform the SDN edge device, at which the failed selected port may be located, to configure the failed port as a non-selected port, inform, when the perceiving unit 403 obtains that the SDN edge device, at which a selected port may be located, disconnects with the SDN, the network device that the selected port on the SDN edge device disconnecting with the SDN may be unselected, take, when the perceiving unit 403 obtains that the failed port recovers or the SDN edge device re-connects with the SDN, the failed port which recovers or the port which may be located at the SDN edge device re-connecting with the SDN and receive an LACP packet from the network device as the selected port of the aggregation group, inform the network device of the SDN edge device, at which the selected port may be located, with the LACP packet from the device, so that the network device may negotiate with the SDN edge device, at which the selected port may be located.

The processing unit 402 may be further to issue a data forwarding path to the SDN edge device, at which the selected ports may be located, so that when the SDN edge device receives a unicast packet, the SDN edge device may forward the unicast packet according to the data forwarding path.

The receiving unit 401 may be further to receive an unknown unicast packet, multicast packet or broadcast packet from the network device or an SDN device in the SDN via the SDN edge device.

The processing unit 402 may be further to issue, when the receiving unit 401 receives the unknown unicast packet, multicast packet or broadcast packet from the network device via the SDN edge device, a blocking strategy of the unknown unicast packet, multicast packet or broadcast packet to the SDN edge device, at which the selected ports are located, so that the SDN edge device may configure ports besides a port receiving the unknown unicast packet, multicast packet or broadcast packet as blocked ports of the unknown unicast packet, multicast packet or broadcast packet, select, when the receiving unit 401 receives the unknown unicast packet, multicast packet or broadcast packet from an SDN device in the SDN via the SDN edge device, a selected port from the aggregation group for forwarding the unknown unicast packet, multicast packet or broadcast packet, and inform the SDN edge device to configure other selected ports besides the selected port of the aggregation group as the blocked ports of the unknown unicast packet, multicast packet or broadcast packet.

The processing unit 402 may be further to select, when the network device determines that a previous packet is correctly forwarded with a MARKER protocol packet, an SDN edge device from the SDN edge devices, at which the selected ports may be located and forward data traffic received via the selected ports to the selected SDN edge device for sequential forwarding.

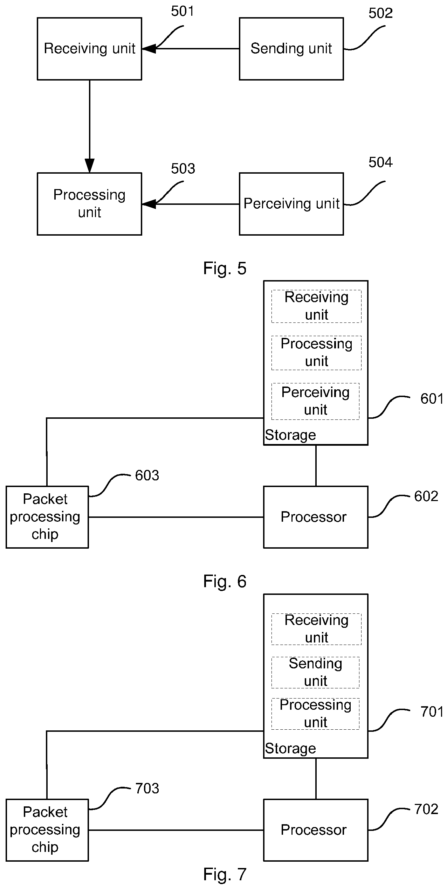

An example of the present disclosure may provide another device. The device may be an SDN edge device in an SDN. The SDN may include an SDN edge device and an SDN controller. The SDN edge device may be an SDN device which may directly connect with a network device outside of the SDN. Referring to figure 5, figure 5 is a schematic diagram illustrating structure of another device in accordance with an example of the present disclosure. The device may include: a receiving unit 501, a sending unit 502 and a processing unit 503.

The receiving unit 501 may be to receive LACP packets from a network device outside of an SDN and receive LACP packets from an SDN controller.

The sending unit 502 may be to forward the LACP packets from the network device to the SDN controller.

The processing unit 503 may be to forward the LACP packets from the SDN controller to the network device and negotiate with the network device to complete link aggregation.

The number of the LACP packets from the SDN controller is same as number of ports which are selected by the SDN controller from ports on the device for receiving the LACP packets from the network device according to an aggregation strategy and taken as selected ports of an aggregation group.

The device may further include: a perceiving unit 504, to obtain whether a selected port of the device fails or the device disconnects with the SDN.

The processing unit 503 may be further to configure, when the perceiving unit 504 obtains that the selected port fails or the device disconnects with the SDN, the failed port as an un-selected port, receive and forward, when the perceiving unit 504 obtains that failed port recovers or the SDN edge device reconnects with the SDN, an LACP packet sent from the SDN controller to the network device and negotiate with the network device to determine whether to take the port on the device of the aggregation group as the selected port of the aggregation group.

The receiving unit 501 may be further to receive a unicast packet and receive an unknown unicast packet, multicast packet or broadcast packet.

The sending unit 502 may be further to forward the unicast packet according to a data forwarding path issued by the SDN controller.

The processing unit 503 may be further to send, when the receiving unit 501 receives the unknown unicast packet, multicast packet or broadcast packet from the network device or an SDN device in the SDN, a blocking strategy of the unknown unicast packet, multicast packet or broadcast packet is issued by the SDN controller and a port for receiving the unknown unicast packet, multicast packet or broadcast packet is not configured as a blocked port, the unknown unicast packet, multicast packet or broadcast packet according to local configuration, send, when the blocking strategy of the unknown unicast packet, multicast packet or broadcast packet is issued by the SDN controller and the port for receiving the unknown unicast packet, multicast packet or broadcast packet is configured as the blocked port, or the SDN controller does not issue the blocking strategy of the unknown unicast packet, multicast packet or broadcast packet, the unknown unicast packet, multicast packet or broadcast packet to the SDN controller, receive the blocking strategy issued by the SDN controller, configure the blocked port of the unknown unicast packet, multicast packet or broadcast packet at local and send the unknown unicast packet, multicast packet or broadcast packet.

The units in the above examples may be integrated together or deployed separately. The units may be combined into one unit or may be split into multiple sub-units.

The SDN controller applied to the SDN may be described in the above examples. The hardware architecture of the SDN controller may be described hereinafter. Referring to figure 6, the SDN controller may be a programmable device based on software and hardware.

Figure 6 is a schematic diagram illustrating hardware architecture of the device in figure 4. The device may include: a storage 601, a processor 602 and a packet processing chip 603.

The storage 601 may store the receiving unit 401, a processing unit 402 and a perceiving unit 403.

The storage 601 may store instructions and various data, such as, port number of selected ports and information of various SDN devices in the network.

The processor 602 may communicate with the packet processing chip 603 and forward protocol packets and data packets. The protocol packets may include: an LACP packet and an MARKER protocol packet. The data packets may include: a unicast packet, a multicast packet and a broadcast packet. The processor 602 may communicate with the storage 601 and execute operations of the above receiving unit 401, processing unit 402 and perceiving unit 403.

The packet processing chip 603 may connect with SDN devices in the SDN and devices in a user network via ports on the packet processing chip 603, receive and transmit the data packets and protocol packets, forward the LACP packets sent from the processor 602 to the SDN edge device and send received protocol packets and data packets to the processor 602.

Figure 7 is a schematic diagram illustrating hardware architecture of the device in figure 5. The device may include: a storage 701, a processor 702 and a packet processing chip 703.

The storage 701 may store a receiving unit 501, a sending unit 502, a processing unit 503 and a perceiving unit 504.

The processor 702 may communicate with the packet processing chip 703 and forward protocol packets and data packets. The protocol packets may include: an LACP packet and an MARKER protocol packet. The data packets may include: a unicast packet, a multicast packet and a broadcast packet. The processor 702 may communicate with the storage 701 and execute operations of the above receiving unit 501, sending unit 502, processing unit 503 and perceiving unit 504.

The packet processing chip 703 may connect with SDN devices in the SDN and devices in a user network via ports on the packet processing chip 703, receive and transmit the data packets and protocol packets, forward the LACP packets sent from the processor 702 to the SDN edge device and send received protocol packets and data packets to the processor 702.

It should be noted that figures 6 and 7 may be implemented via other examples different from those in the present disclosure. For instance, the operations performed by executing the above instructions may be performed by an Application Specific Integrated Circuit (ASIC). Furthermore, there may be one or multiple processors 602 or processors 702. If there are multiple processors 602 and processors 702, the instructions may be read and executed by multiple processors. Therefore, the structure of the SDN controller in the SDN may not be limited to that described in the present disclosure.

According to an example, the SDN controller may receive LACP packets from the network device via the SDN edge device, select ports from ports on the SDN edge device for receiving the LACP packets as the selected ports of the aggregation group according to an aggregation strategy, send LACP packets, the number of which is the same as number of the selected ports to the network device, so that the network device may negotiate with the SDN edge device, at which the selected ports are located, to complete link aggregation. With this method, the link aggregation between the SDN edge device and the network device outside of the SDN may be implemented.

According to an example, when a traditional network device docks with an SDN edge device, dynamic aggregation, such as, port selection, traffic forwarding, failure processing and recovery, may be implemented via LACP packets. Especially, with examples of the present disclosure, the network device may perform cross-device aggregation with multiple SDN edge devices.

According to an example of the present disclosure, modules or units in the SDN controller or SDN edge device of the SDN may be integrated together or separately deployed. The modules or units may be combined into one module or unit or may be split into multiple sub-modules or sub-units.

In various embodiments, a hardware module or unit may be implemented mechanically or electronically. For example, a hardware module or unit may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

What has been described and illustrated herein are examples of the disclosure along with some variations. The terms, descriptions and figures used herein are set forth by way of illustration only and are not meant as limitations. Many variations are possible within the scope of the disclosure, which is intended to be defined by the following claims in which all terms are meant in their broadest reasonable sense unless otherwise indicated.

## Claims

1. A link aggregation method, comprising:
receiving, by a Software Defined Network, SDN, controller, Link Aggregation Control Protocol, LCAP, packets belonging to a same aggregation group from a network device outside of an SDN via an SDN edge device (101);
selecting, by the SDN controller, ports from among ports on the SDN edge device that have received LACP packets as selected ports of the aggregation group according to an aggregation strategy (102);
informing the network device of the SDN edge device at which the selected ports are located, so as to cause the network device to negotiate with the SDN edge device to complete a link aggregation;
wherein said informing comprises the SDN controller sending LACP packets to the network device via an SDN edge device (103).

2. The method according to claim 1, wherein
receiving, by the SDN controller, the LACP packets belonging to the same aggregation group from the network device outside of the SDN via the SDN edge device comprises:
receiving, by the SDN controller, the LACP packets sent from the network device via different SDN edge devices;
selecting, by the SDN controller, the ports from the ports on the SDN edge device for receiving the LACP packets sent from the network device as the selected ports of the aggregation group according to the aggregation strategy comprises:
selecting, by the SDN controller, an SDN edge device from the SDN edge devices forwarding the LACP packets sent from the network device as a central reference point and selecting SDN edge devices connecting with the central reference point; and
taking, by the SDN controller, the ports on the selected SDN edge devices for receiving the LACP packets from the network device as the selected ports of the aggregation group;
the LACP packets, number of which is the same as that of the selected ports, sent from the SDN controller carry a same system ID.

3. The method according to claim 1, further comprising:
when the SDN controller determines that a selected port of the aggregation group is failed, informing, by the SDN controller, the network device that the failed port is unselected and informing an SDN edge device, at which the failed selected port is located, to configure the failed port as a non-selected port;
when the SDN controller determines that the SDN edge device, at which the selected ports are located, of the aggregation group disconnects with the SDN, informing, by the SDN controller, the network device that the selected ports on the SDN edge device disconnecting with the SDN are unselected;
when the SDN controller determines that the failed port recovers or the SDN edge device re-connects with the SDN, taking, by the SDN controller, the failed port which recovers or the ports which are located at the SDN edge device re-connecting with the SDN and receive the LACP packets from the network device as the selected ports of the aggregation group, informing the network device of the SDN edge device, at which the selected ports are located, with the LACP packets from the SDN controller, so that the network device negotiates with the SDN edge device, at which the selected ports are located.

4. The method according to claim 1, further comprising:
issuing, by the SDN controller, a data forwarding path for the SDN edge device, at which the selected ports are located, so that when the SDN edge device receives a unicast packet, the SDN edge device forwards the unicast packet according to the data forwarding path;
when the SDN controller receives an unknown unicast packet, multicast packet or broadcast packet from the network device via the SDN edge device, at which the selected ports are located, issuing, by the SDN controller, a blocking strategy of the unknown unicast packet, multicast packet or broadcast packet to the SDN edge device, at which the selected ports are located, so that the SDN edge device configures ports besides a port for receiving the unknown unicast packet, multicast packet or broadcast packet of the aggregation group as blocked ports of the unknown unicast packet, multicast packet or broadcast packet;
when the SDN controller receives an unknown unicast packet, multicast packet or broadcast packet from an SDN device in the SDN via the SDN edge device, selecting, by the SDN controller, a selected port from the aggregation group for forwarding the unknown unicast packet, multicast packet or broadcast packet, and informing the SDN edge device to configure other selected ports besides the selected port of the aggregation group as the blocked ports of the unknown unicast packet, multicast packet or broadcast packet.

5. The method according to claim 2, further comprising:
when the network device determines that a previous packet is correctly forwarded with a MARKER protocol packet, selecting, by the SDN controller, an SDN edge device from the SDN edge devices, at which the selected ports are located and forwarding data traffic received via the selected ports to the selected SDN edge device for sequential forwarding.

6. The method according to claim 2, wherein selecting, by the SDN controller, an SDN edge device from the SDN edge devices forwarding the LACP packets sent from the network device as a central reference point comprises:
selecting, by the SDN controller, an SDN edge device connecting with most SDN edge devices from the SDN edge devices forwarding the LACP packets sent from the network device as the central reference point; or
selecting, by the SDN controller, an SDN edge device as the central reference point according to how busy traffic of the SDN edge devices forwarding the LACP packets sent from the network device is or how busy traffic of the ports receiving the LACP packets sent from the network device is; or
selecting, by the SDN controller, an SDN edge device as the central reference point according to aggregation priorities of the ports receiving the LACP packets sent from the network device.

7. A link aggregation method, comprising:
receiving, by an SDN edge device, LACP packets from a network device outside of an SDN and forwarding the LACP packets from the network device to an SDN controller (201);
receiving, by the SDN edge device, LACP packets from the SDN controller, sending the LACP packets from the SDN controller to the network device and negotiating with the network device to complete link aggregation (202).

8. The method according to claim 7, further comprising:
when the SDN edge device determines that a selected port of the SDN edge device fails or the SDN edge device disconnects with the SDN, configuring, by the SDN edge device, the failed port as an un-selected port;
when the failed port recovers or the SDN edge device reconnects with the SDN, receiving and forwarding, by the SDN edge device, an LACP packet sent from the SDN controller to the network device and negotiating with the network device to determine whether to take a port on the SDN edge device of the aggregation group as the selected port of the aggregation group.

9. The method according to claim 7, further comprising:
receiving, by the SDN edge device, a unicast packet and forwarding the unicast packet according to a data forwarding path issued by the SDN controller;
receiving, by the SDN edge device, an unknown unicast packet, multicast packet or broadcast packet from the network device or an SDN device in the SDN;
when the SDN edge device determines that a blocking strategy of the unknown unicast packet, multicast packet or broadcast packet is issued by the SDN controller and a port receiving the unknown unicast packet, multicast packet or broadcast packet is not configured as a blocked port, sending, by the SDN edge device, the unknown unicast packet, multicast packet or broadcast packet according to local configuration;
when the SDN edge device determines that the blocking strategy of the unknown unicast packet, multicast packet or broadcast packet is issued by the SDN controller and the port for receiving the unknown unicast packet, multicast packet or broadcast packet is configured as the blocked port, or the SDN controller does not issue the blocking strategy of the unknown unicast packet, multicast packet or broadcast packet, sending, by the SDN edge device, the unknown unicast packet, multicast packet or broadcast packet to the SDN controller, receiving the blocking strategy issued by the SDN controller, configuring the blocked port of the unknown unicast packet, multicast packet or broadcast packet at local and sending the unknown unicast packet, multicast packet or broadcast packet.

10. A device, comprising:
a receiving unit, to receive Link Aggregation Control Protocol, LCAP, packets belonging to a same aggregation group from a network device outside of an SDN via an SDN edge device; and
a processing unit, to select a number of ports from among ports on the SDN edge device for receiving the LACP packets as selected ports of the aggregation group according to an aggregation strategy, and send LACP packets to the network device via an SDN edge device to inform the network device of an identity of the SDN edge device at which the selected ports are located, so as to cause the network device to negotiate with the SDN edge device to complete a link aggregation.

11. The device according to claim 10, wherein the processing unit is further to select, when the receiving unit receives the LACP packets from the network device via different SDN edge devices, an SDN edge device from the SDN edge devices forwarding the LACP packets from the network device as a central reference point, select SDN edge devices connecting with the central reference point and take the ports on the selected SDN edge devices for receiving the LACP packets from the network device as the selected ports of the aggregation group;
the LACP packets, number of which is the same as that of the selected ports, sent from the processing unit carry a same system ID.

12. The device according to claim 10, further comprising:
a perceiving unit, to obtain whether the SDN edge device disconnects with the SDN and whether a selected port of the SDN edge device fails;
wherein the processing unit is further to inform, when the perceiving unit determines that a selected port fails, the network device that the failed port is unselected, inform the SDN edge device, at which the failed selected port is located, to configure the failed port as a non-selected port, inform, when the perceiving unit determines that the SDN edge device, at which a selected port is located, disconnects with the SDN, the network device that the selected port on the SDN edge device disconnecting with the SDN is unselected, take, when the perceiving unit determines that the failed port recovers or the SDN edge device re-connects with the SDN, the failed port which recovers or a port which is located at the SDN edge device re-connecting with the SDN and receive an LACP packet from the network device as the selected port of the aggregation group, inform the network device of the SDN edge device, at which the selected port is located, with the LACP packet from the device, so that the network device negotiates with the SDN edge device, at which the selected port is located.

13. The device according to claim 11, wherein
the processing unit is further to select, when the network device determines that a previous packet is correctly forwarded with a MARKER protocol packet, an SDN edge device from the SDN edge devices, at which the selected ports are located and forward data traffic received via the selected ports to the selected SDN edge device for sequential forwarding.

14. A device, comprising:
a receiving unit, to receive Link Aggregation Control Protocol, LCAP, packets from a network device outside of an Software Defined Network, SDN, and receive LACP packets from an SDN controller;
a sending unit, to forward the LACP packets from the network device to the SDN controller;
a processing unit, to forward the LACP packets from the SDN controller to the network device and negotiate with the network device to complete link aggregation.

15. The device according to claim 14, further comprising:
a perceiving unit, to obtain whether a selected port of the device fails or the device disconnects with the SDN; wherein
the processing unit is further to configure, when the perceiving unit determines that the selected port fails or the device disconnects with the SDN, the failed port as an un-selected port, receive and forward, when the perceiving unit determines that failed port recovers or the SDN edge device reconnects with the SDN, an LACP packet sent from the SDN controller to the network device and negotiate with the network device to determine whether to take the port on the device of the aggregation group as the selected port of the aggregation group.

## Patentansprüche

1. Link-Aggregation-Verfahren, umfassend:
Empfangen von Paketen eines Link Aggregation Control Protocol, LACP, die zu einer gleichen Aggregation-Gruppe gehören, durch eine Steuerung eines Software Defined Network, SDN, von einer Netzwerkvorrichtung außerhalb eines SDN über eine SDN-Edge-Vorrichtung (101);
Auswählen von Ports unter Ports an der SDN-Edge-Vorrichtung, die LACP-Pakete empfangen haben, durch die SDN-Steuerung als ausgewählte Ports der Aggregation-Gruppe gemäß einer Aggregation-Strategie (102);
Informieren der Netzwerkvorrichtung der SDN-Edge-Vorrichtung, an welcher sich die ausgewählten Ports befinden, um zu veranlassen, dass die Netzwerkvorrichtung mit der SDN-Edge-Vorrichtung verhandelt, um eine Link Aggregation abzuschließen;
wobei das Informieren umfasst, dass die SDN-Steuerung LACP-Pakete über eine SDN-Edge-Vorrichtung (103) an die Netzwerkvorrichtung sendet.

2. Verfahren nach Anspruch 1, wobei das Empfangen der LACP-Pakete, die zu der gleichen Aggregation-Gruppe gehören, durch die SDN-Steuerung von der Netzwerkvorrichtung außerhalb des SDN über die SDN-Edge-Vorrichtung Folgendes umfasst:
Empfangen der von der Netzwerkvorrichtung gesendeten LACP-Pakete durch die SDN-Steuerung über unterschiedliche SDN-Edge-Vorrichtungen;
wobei das Auswählen der Ports von den Ports an der SDN-Edge-Vorrichtung zum Empfangen der von der Netzwerkvorrichtung gesendeten LACP-Pakete durch die SDN-Steuerung als die ausgewählten Ports der Aggregation-Gruppe gemäß der Aggregation-Strategie Folgendes umfasst:
Auswählen einer SDN-Edge-Vorrichtung von den SDN-Edge-Vorrichtungen, welche die von der Netzwerkvorrichtung gesendeten LACP-Pakete weiterleiten, durch die SDN-Steuerung als einen zentralen Bezugspunkt und Auswählen von SDN-Edge-Vorrichtungen, die sich mit dem zentralen Bezugspunkt verbinden; und
Heranziehen der Ports an den ausgewählten SDN-Edge-Vorrichtungen zum Empfangen der LACP-Pakete von der Netzwerkvorrichtung durch die SDN-Steuerung als die ausgewählten Ports der Aggregation-Gruppe;
wobei die LACP-Pakete, deren Anzahl der Anzahl der ausgewählten Ports entspricht, die von der SDN-Steuerung gesendet werden, eine gleiche System-ID tragen.

3. Verfahren nach Anspruch 1, ferner umfassend:
wenn die SDN-Steuerung bestimmt, dass ein ausgewählter Port der Aggregation-Gruppe fehlerhaft ist, Informieren der Netzwerkvorrichtung durch die SDN-Steuerung, dass der fehlerhafte Port nicht ausgewählt ist, und Informieren einer SDN-Edge-Vorrichtung, an welcher sich der fehlerhafte ausgewählte Port befindet, dass sie den fehlerhaften Port als einen nicht ausgewählten Port konfigurieren soll;
wenn die SDN-Steuerung bestimmt, dass sich die SDN-Edge-Vorrichtung, an welcher sich die ausgewählten Ports befinden, aus der Aggregation-Gruppe von dem SDN trennt, Informieren der Netzwerkvorrichtung durch die SDN-Steuerung, dass die ausgewählten Ports an der SDN-Edge-Vorrichtung, die sich von dem SDN trennen, nicht ausgewählt sind;
wenn die SDN-Steuerung bestimmt, dass der fehlerhafte Port wiederhergestellt wird oder sich die SDN-Edge-Vorrichtung erneut mit dem SDN verbindet, Heranziehen des fehlerhaften Ports, welcher wiederhergestellt wird, oder der Ports, die sich an der SDN-Edge-Vorrichtung befinden, die sich erneut mit dem SDN verbindet, und die LACP-Pakete von der Netzwerkvorrichtung empfangen, durch die SDN-Steuerung als die ausgewählten Ports der Aggregation-Gruppe, Informieren der Netzwerkvorrichtung der SDN-Edge-Vorrichtung, an welcher sich die ausgewählten Ports befinden, mit den LACP-Paketen von der SDN-Steuerung, sodass die Netzwerkvorrichtung mit der SDN-Edge-Vorrichtung verhandelt, an der sich die ausgewählten Ports befinden.

4. Verfahren nach Anspruch 1, ferner umfassend:
Ausgeben eines Datenweiterleitungspfads für die SDN-Edge-Vorrichtung, an welcher sich die ausgewählten Ports befinden, durch die SDN-Steuerung, sodass, wenn die SDN-Edge-Vorrichtung ein Unicast-Paket empfängt, die SDN-Edge-Vorrichtung das Unicast-Paket gemäß dem Datenweiterleitungspfad weiterleitet;
wenn die SDN-Steuerung ein unbekanntes Unicast-Paket, Multicast-Paket oder Broadcast-Paket von der Netzwerkvorrichtung über die SDN-Edge-Vorrichtung empfängt, an welcher sich die ausgewählten Ports befinden, Ausgeben einer Blockierungsstrategie des unbekannten Unicast-Pakets, Multicast-Pakets oder Broadcast-Pakets durch die SDN-Steuerung an die SDN-Edge-Vorrichtung, an welcher sich die ausgewählten Ports befinden, sodass die SDN-Edge-Vorrichtung Ports neben einem Port zum Empfangen des unbekannten Unicast-Pakets, Multicast-Pakets oder Broadcast-Pakets der Aggregation-Gruppe als blockierte Ports des unbekannten Unicast-Pakets, Multicast-Pakets oder Broadcast-Pakets konfiguriert;
wenn die SDN-Steuerung ein unbekanntes Unicast-Paket, Multicast-Paket oder Broadcast-Paket von einer SDN-Vorrichtung in dem SDN über die SDN-Edge-Vorrichtung empfängt, Auswählen eines ausgewählten Ports aus der Aggregation-Gruppe durch die SDN-Steuerung zum Weiterleiten des unbekannten Unicast-Pakets, Multicast-Pakets oder Broadcast-Pakets, und Informieren der SDN-Edge-Vorrichtung, dass sie andere ausgewählte Ports neben dem ausgewählten Port der Aggregation-Gruppe als die blockierten Ports des unbekannten Unicast-Pakets, Multicast-Pakets oder Broadcast-Pakets konfigurieren soll.

5. Verfahren nach Anspruch 2, ferner umfassend:
wenn die Netzwerkvorrichtung bestimmt, dass ein vorheriges Paket korrekt mit einem MARKER-Protokollpaket weitergeleitet wird, Auswählen einer SDN-Edge-Vorrichtung aus den SDN-Edge-Vorrichtungen, an denen sich die ausgewählten Ports befinden, durch die SDN-Steuerung und Weiterleiten von Datenverkehr, der über die ausgewählten Ports empfangen wird, an die ausgewählte SDN-Edge-Vorrichtung zum sequenziellen Weiterleiten.

6. Verfahren nach Anspruch 2, wobei das Auswählen einer SDN-Edge-Vorrichtung aus den SDN-Edge-Vorrichtungen, welche die von der Netzwerkvorrichtung gesendeten LACP-Pakete weiterleiten, durch die SDN-Steuerung als einen zentralen Bezugspunkt, Folgendes umfasst:
Auswählen einer SDN-Edge-Vorrichtung, die sich mit den meisten SDN-Edge-Vorrichtungen aus den SDN-Edge-Vorrichtungen verbindet, welche die von der Netzwerkvorrichtung gesendeten LACP-Pakete weiterleiten, durch die SDN-Steuerung als den zentralen Bezugspunkt; oder
Auswählen einer SDN-Edge-Vorrichtung durch die SDN-Steuerung als den zentralen Bezugspunkt danach, wie stark der Verkehr der SDN-Edge-Vorrichtungen ist, welche die von der Netzwerkvorrichtung gesendeten LACP-Pakete weiterleiten, oder wie stark der Verkehr der Ports ist, welche die von der Netzwerkvorrichtung gesendeten LACP-Pakete empfangen; oder
Auswählen einer SDN-Edge-Vorrichtung durch die SDN-Steuerung als den zentralen Bezugspunkt gemäß Aggregation-Prioritäten der Ports, welche die von der Netzwerkvorrichtung gesendeten LACP-Pakete empfangen.

7. Link-Aggregation-Verfahren, umfassend:
Empfangen von LACP-Paketen durch eine SDN-Edge-Vorrichtung von einer Netzwerkvorrichtung außerhalb eines SDN und Weiterleiten der LACP-Pakete von der Netzwerkvorrichtung zu einer SDN-Steuerung (201);
Empfangen von LACP-Paketen durch die SDN-Edge-Vorrichtung von der SDN-Steuerung, Senden der LACP-Pakete von der SDN-Steuerung an die Netzwerkvorrichtung und Verhandeln mit der Netzwerkvorrichtung, um die Link Aggregation abzuschließen (202);

8. Verfahren nach Anspruch 7, ferner umfassend:
wenn die SDN-Edge-Vorrichtung bestimmt, dass ein ausgewählter Port der SDN-Edge-Vorrichtung fehlerhaft ist oder sich die SDN-Edge-Vorrichtung von dem SDN trennt, Konfigurieren des fehlerhaften Ports durch die SDN-Edge-Vorrichtung als ein nicht ausgewählter Port;
wenn der fehlerhafte Port wiederhergestellt wird oder sich die SDN-Edge-Vorrichtung erneut mit dem SDN verbindet, Empfangen und Weiterleiten eines LACP-Pakets, das von der SDN-Steuerung an die Netzwerkvorrichtung gesendet wird, durch die SDN-Edge-Vorrichtung und Verhandeln mit der Netzwerkvorrichtung, um zu bestimmen, ob ein Port an der SDN-Edge-Vorrichtung der Aggregation-Gruppe als der ausgewählte Port der Aggregation-Gruppe herangezogen werden soll.

9. Verfahren nach Anspruch 7, ferner umfassend:
Empfangen eines Unicast-Pakets durch die SDN-Edge-Vorrichtung und Weiterleiten des Unicast-Pakets gemäß einem Datenweiterleitungspfad, der von der SDN-Steuerung ausgegeben wird;
Empfangen eines unbekannten Unicast-Pakets, Multicast-Pakets oder Broadcast-Pakets durch die SDN-Edge-Vorrichtung von der Netzwerkvorrichtung oder einer SDN-Vorrichtung in dem SDN;
wenn die SDN-Edge-Vorrichtung bestimmt, dass eine Blockierungsstrategie des unbekannten Unicast-Pakets, Multicast-Pakets oder Broadcast-Pakets von der SDN-Steuerung ausgegeben wird und ein Port, der das unbekannte Unicast-Paket, Multicast-Paket oder Broadcast-Paket empfängt, nicht als ein blockierter Port konfiguriert ist, Senden des unbekannten Unicast-Pakets, Multicast-Pakets oder Broadcast-Pakets durch die SDN-Edge-Vorrichtung gemäß einer lokalen Konfiguration;
wenn die SDN-Edge-Vorrichtung bestimmt, dass die Blockierungsstrategie des unbekannten Unicast-Pakets, Multicast-Pakets oder Broadcast-Pakets von der SDN-Steuerung ausgegeben wird und der Port zum Empfangen des unbekannten Unicast-Pakets, Multicast-Pakets oder Broadcast-Pakets als der blockierte Port konfiguriert ist, oder die SDN-Steuerung die Blockierungsstrategie des unbekannten Unicast-Pakets, Multicast-Pakets oder Broadcast-Pakets nicht ausgibt, Senden des unbekannten Unicast-Pakets, Multicast-Pakets oder Broadcast-Pakets durch die SDN-Edge-Vorrichtung an die SDN-Steuerung, Empfangen der von der SDN-Steuerung ausgegebenen Blockierungsstrategie, lokales Konfigurieren des blockierten Ports des unbekannten Unicast-Pakets, Multicast-Pakets oder Broadcast-Pakets und Senden des unbekannten Unicast-Pakets, Multicast-Pakets oder Broadcast-Pakets.

10. Vorrichtung, umfassend:
eine Empfangseinheit zum Empfangen von Paketen eines Link Aggregation Control Protocol, LACP, die zu einer gleichen Aggregation-Gruppe gehören, von einer Netzwerkvorrichtung außerhalb eines SDN über eine SDN-Edge-Vorrichtung; und
eine Verarbeitungseinheit zum Auswählen einer Anzahl von Ports unter Ports an der SDN-Edge-Vorrichtung zum Empfangen der LACP-Pakete als ausgewählte Ports der Aggregation-Gruppe gemäß einer Aggregation-Strategie, und Senden von LACP-Paketen an die Netzwerkvorrichtung über eine SDN-Edge-Vorrichtung, um die Netzwerkvorrichtung über eine Identität der SDN-Edge-Vorrichtung zu informieren, an welcher sich die ausgewählten Ports befinden, um zu veranlassen, dass die Netzwerkvorrichtung mit der SDN-Edge-Vorrichtung verhandelt, um eine Link Aggregation abzuschließen.

11. Vorrichtung nach Anspruch 10, wobei die Verarbeitungseinheit ferner, wenn die Empfangseinheit die LACP-Pakete von der Netzwerkvorrichtung über unterschiedliche SDN-Edge-Vorrichtungen empfängt, eine SDN-Edge-Vorrichtung von den SDN-Edge-Vorrichtungen, welche die von der Netzwerkvorrichtung gesendeten LACP-Pakete weiterleiten, als einen zentralen Bezugspunkt auswählen soll, SDN-Edge-Vorrichtungen, die sich mit dem zentralen Bezugspunkt verbinden, auswählen soll und die Ports an den ausgewählten SDN-Edge-Vorrichtungen zum Empfangen der LACP-Pakete von der Netzwerkvorrichtung als die ausgewählten Ports der Aggregation-Gruppe heranziehen soll;
wobei die LACP-Pakete, deren Anzahl der Anzahl der ausgewählten Ports entspricht, die von der Verarbeitungseinheit gesendet werden, eine gleiche System-ID tragen.

12. Vorrichtung nach Anspruch 10, ferner umfassend:
eine Wahrnehmungseinheit, um zu erhalten, ob sich die SDN-Edge-Vorrichtung von dem SDN trennt und ob ein ausgewählter Port der SDN-Edge-Vorrichtung fehlerhaft ist;
wobei die Verarbeitungseinheit ferner, wenn die Wahrnehmungseinheit bestimmt, dass ein ausgewählter Port fehlerhaft ist, die Netzwerkvorrichtung darüber informieren soll, dass der fehlerhafte Port nicht ausgewählt ist, die SDN-Edge-Vorrichtung, an welcher sich der fehlerhafte Port befindet, informieren soll, um den fehlerhaften Port als einen nicht ausgewählten Port zu konfigurieren, wenn die Wahrnehmungseinheit bestimmt, dass sich die SDN-Edge-Vorrichtung, an welcher sich ein fehlerhafter Port befindet, von dem SDN trennt, die Netzwerkvorrichtung darüber informieren soll, dass der ausgewählte Port an der SDN-Edge-Vorrichtung, die sich von dem SDN trennt, nicht ausgewählt ist, wenn die Wahrnehmungseinheit bestimmt, dass der fehlerhafte Port wiederhergestellt wird oder sich die SDN-Edge-Vorrichtung erneut mit dem SDN verbindet, den fehlerhaften Port, welcher wiederhergestellt wird oder einen Port, welcher sich an der SDN-Edge-Vorrichtung befindet, die sich erneut mit dem SDN verbindet und ein LACP-Paket von der Netzwerkvorrichtung empfängt, als den ausgewählten Port der Aggregation-Gruppe heranziehen soll, die Netzwerkvorrichtung der SDN-Edge-Vorrichtung, an welcher sich der ausgewählte Port befindet, mit dem LACP-Paket von der Vorrichtung informieren soll, sodass die Netzwerkvorrichtung mit der SDN-Edge-Vorrichtung verhandelt, an welcher sich der ausgewählte Port befindet.

13. Vorrichtung nach Anspruch 11, wobei
die Verarbeitungseinheit ferner, wenn die Netzwerkvorrichtung bestimmt, dass ein vorheriges Paket korrekt mit einem MARKER-Protokollpaket weitergeleitet wird, eine SDN-Edge-Vorrichtung aus den SDN-Edge-Vorrichtungen auswählen soll, an denen sich die ausgewählten Ports befinden, und Datenverkehr, der über die ausgewählten Ports empfangen wird, an die ausgewählte SDN-Edge-Vorrichtung zum sequenziellen Weiterleiten weiterleiten soll.

14. Vorrichtung, umfassend:
eine Empfangseinheit zum Empfangen von Paketen eines Link Aggregation Control Protocol, LACP, von einer Netzwerkvorrichtung außerhalb eines Software Defined Network, SDN, und zum Empfangen von LACP-Paketen von einer SDN-Steuerung;
eine Sendeeinheit zum Weiterleiten der LACP-Pakete von der Netzwerkvorrichtung an die SDN-Steuerung;
eine Verarbeitungseinheit zum Weiterleiten der LACP-Pakete von der SDN-Steuerung an die Netzwerkvorrichtung und zum Verhandeln mit der Netzwerkvorrichtung, um eine Link Aggregation abzuschließen.

15. Vorrichtung nach Anspruch 14, ferner umfassend:
eine Wahrnehmungseinheit, um zu erhalten, ob ein ausgewählter Port der Vorrichtung fehlerhaft ist oder sich die Vorrichtung von dem SDN trennt; wobei
die Verarbeitungseinheit ferner, wenn die Wahrnehmungseinheit bestimmt, dass der ausgewählte Port fehlerhaft ist oder sich die Vorrichtung von dem SDN trennt, den fehlerhaften Port als einen nicht ausgewählten Port konfigurieren soll, wenn die Wahrnehmungseinheit bestimmt, dass der fehlerhafte Port wiederhergestellt wird oder sich die SDN-Edge-Vorrichtung erneut mit dem SDN verbindet, ein von der SDN-Steuerung an die Netzwerkvorrichtung gesendetes LACP-Paket empfangen und weiterleiten soll und mit der Netzwerkvorrichtung verhandeln soll, um zu bestimmen, ob der Port an der Vorrichtung der Aggregation-Gruppe als der ausgewählte Port der Aggregation-Gruppe herangezogen werden soll.

## Revendications

1. Procédé d'agrégation de liaisons, comprenant :
la réception, par un dispositif de commande de réseau défini par logiciel, SDN, de paquets de protocole de commande d'agrégation de liaisons, LACP, appartenant à un même groupe d'agrégation à partir d'un dispositif de réseau en dehors d'un SDN par l'intermédiaire d'un dispositif périphérique de SDN (101) ;
la sélection, par le dispositif de commande de SDN, de ports parmi des ports sur le dispositif périphérique de SDN qui ont reçu des paquets de LACP en tant que ports sélectionnés du groupe d'agrégation selon une stratégie d'agrégation (102) ;
la communication d'informations au dispositif de réseau du dispositif de réseau de SDN sur lequel se trouvent les ports sélectionnés, de façon à amener le dispositif de réseau à négocier avec le dispositif périphérique de SDN en vue de terminer une agrégation de liaisons ;
dans lequel ladite transmission d'informations comprend l'envoi par le dispositif de commande de SDN de paquets de LACP au dispositif de réseau par l'intermédiaire d'un dispositif périphérique de SDN (103).

2. Procédé selon la revendication 1, dans lequel
la réception, par le dispositif de commande de SDN, des paquets de LACP appartenant au même groupe d'agrégation du dispositif de réseau en dehors du SDN par l'intermédiaire du dispositif périphérique de SDN comprend :
la réception, par le dispositif de commande de SDN, des paquets de LACP envoyés à partir du dispositif de réseau par l'intermédiaire de dispositifs périphériques de SDN différents ;
la sélection, par le dispositif de commande de SDN, des ports parmi les ports sur le dispositif périphérique de SDN pour recevoir les paquets de LACP envoyés à partir du dispositif de réseau en tant que ports sélectionnés du groupe d'agrégation selon la stratégie d'agrégation comprenant :
la sélection, par le dispositif de commande de SDN, d'un dispositif périphérique de SDN à partir des dispositifs périphériques de SDN transmettant les paquets de LACP envoyés à partir du dispositif de réseau en tant que point de référence central et la sélection de dispositifs périphériques de SDN se connectant au point de référence central ; et
le choix, par le dispositif de commande de SDN, des ports sur les dispositifs périphériques de SDN sélectionnés pour recevoir les paquets de LACP à partir du dispositif de réseau en tant que ports sélectionnés du groupe d'agrégation ;
les paquets de LACP, dont le nombre est le même que celui des ports sélectionnés, étant envoyés à partir du dispositif de commande de SDN et portent le même identifiant système.

3. Procédé selon la revendication 1, comprenant en outre :
lorsque le dispositif de commande de SDN détermine qu'un port sélectionné du groupe d'agrégation est défaillant, la communication d'informations, par le dispositif de commande de SDN, au dispositif de réseau que le port défaillant est désélectionné et la communication d'informations à un dispositif périphérique de SDN, sur lequel se trouve le port sélectionné défaillant, en vue de configurer le port défaillant en tant que port non sélectionné ;
lorsque le dispositif de commande de SDN détermine que le dispositif périphérique de SDN, sur lequel se trouvent les ports sélectionnés, du groupe d'agrégation se déconnecte du SDN, la communication d'informations, par le dispositif de réseau de SDN, au dispositif de réseau que les ports sélectionnés sur le dispositif périphérique de SDN se déconnectant du SDN sont désélectionnés ;
lorsque le dispositif de commande de SDN détermine que le port défaillant se rétablit ou que le dispositif périphérique de SDN se reconnecte au SDN, le choix, par le dispositif de commande de SDN, du port défaillant qui se rétablit ou des ports qui se trouvent sur le dispositif périphérique de SDN se reconnectant au SDN et qui reçoivent les paquets de LACP à partir du dispositif de réseau en tant que ports sélectionnés du groupe d'agrégation, la communication d'informations au dispositif de réseau du dispositif périphérique de SDN, sur lequel se trouvent les ports sélectionnés, avec les paquets de LACP à partir du dispositif de commande de SDN, de telle sorte que le dispositif de réseau négocie avec le dispositif périphérique de SDN, sur lequel se trouvent les ports sélectionnés.

4. Procédé selon la revendication 1, comprenant en outre :
l'émission, par le dispositif de commande de SDN, d'un chemin de transmission de données pour le dispositif périphérique de SDN, sur lequel se trouvent les ports sélectionnés, de telle sorte que lorsque le dispositif périphérique de SDN reçoit un paquet de monodiffusion, le dispositif périphérique de SDN transmet le paquet de monodiffusion selon le chemin de transmission de données ;
lorsque le dispositif de commande de SDN reçoit un paquet de monodiffusion, un paquet de multidiffusion ou un paquet de diffusion inconnu à partir du dispositif de réseau par l'intermédiaire du dispositif périphérique de SDN, sur lequel se trouvent les ports sélectionnés, l'émission, par le dispositif de commande de SDN, d'une stratégie de blocage du paquet de monodiffusion, du paquet de multidiffusion ou du paquet de diffusion inconnu au dispositif périphérique de SDN, sur lequel se trouvent les ports sélectionnés, de telle sorte que le dispositif périphérique de SDN configure des ports en plus d'un port pour recevoir le paquet de monodiffusion, le paquet de multidiffusion ou le paquet de diffusion inconnu du groupe d'agrégation en tant que ports bloqués du paquet de monodiffusion, du paquet de multidiffusion ou du paquet de diffusion inconnu ;
lorsque le dispositif de commande de SDN reçoit un paquet de monodiffusion, un paquet de multidiffusion ou un paquet de diffusion inconnu à partir d'un dispositif de SDN dans le SDN par l'intermédiaire du dispositif périphérique de SDN, la sélection, par le dispositif de commande de SDN, d'un port sélectionné à partir du groupe d'agrégation pour transmettre le paquet de monodiffusion, le paquet de multidiffusion ou le paquet de diffusion inconnu, et la communication d'informations au dispositif périphérique de SDN en vue de configurer d'autres ports sélectionnés en plus du port sélectionné du groupe d'agrégation en tant que ports bloqués du paquet de monodiffusion, du paquet de multidiffusion ou du paquet de diffusion inconnu.

5. Procédé selon la revendication 2, comprenant en outre :
lorsque le dispositif de réseau détermine qu'un paquet précédent est correctement transmis avec un paquet de protocole MARKER, la sélection, par le dispositif de commande de SDN, d'un dispositif périphérique de SDN à partir des dispositifs périphériques de SDN, sur lequel se trouvent les ports sélectionnés et la transmission du trafic de données reçu par l'intermédiaire des ports sélectionnés au dispositif périphérique de SDN sélectionné pour une transmission séquentielle.

6. Procédé selon la revendication 2, dans lequel la sélection, par le dispositif de commande de SDN, d'un dispositif périphérique de SDN à partir des dispositifs périphériques de SDN transmettant les paquets de LACP envoyés à partir du dispositif de réseau en tant que point de référence central comprend :
la sélection, par le dispositif de commande de SDN, d'un dispositif périphérique de SDN se connectant à la plupart des dispositifs périphériques de SDN à partir des dispositifs périphériques de SDN transmettant les paquets de LACP envoyés à partir du dispositif de réseau en tant que point de référence central ; ou
la sélection, par le dispositif de commande de SDN, d'un dispositif périphérique de SDN en tant que point de référence central selon la manière dont le trafic des dispositifs périphériques de SDN transmettant les paquets de LACP envoyés à partir du dispositif de réseau est occupé ou selon la manière dont le trafic des ports recevant les paquets de LACP envoyés à partir du dispositif de réseau est occupé ; ou
la sélection, par le dispositif de commande de SDN, d'un dispositif périphérique de SDN en tant que point de référence central selon des priorités d'agrégation des ports recevant les paquets de LACP envoyés à partir du dispositif de réseau.

7. Procédé d'agrégation de liaisons, comprenant :
la réception, par un dispositif périphérique de SDN, de paquets de LACP à partir d'un dispositif de réseau en dehors d'un SDN et la transmission des paquets de LACP du dispositif de réseau à un dispositif de commande de SDN (201) ;
la réception, par le dispositif périphérique de SDN, de paquets de LACP à partir du dispositif de commande de SDN, l'envoi des paquets de LACP du dispositif de commande de SDN au dispositif de réseau et la négociation avec le dispositif de réseau en vue de terminer l'agrégation de liaisons (202) ;

8. Procédé selon la revendication 7, comprenant en outre :
lorsque le dispositif périphérique de SDN détermine qu'un port sélectionné du dispositif périphérique de SDN est défaillant ou que le dispositif périphérique de SDN se déconnecte du SDN, la configuration, par le dispositif périphérique de SDN, du port défaillant en tant que port désélectionné ;
lorsque le port défaillant se rétablit ou que le dispositif périphérique de SDN se reconnecte au SDN, la réception et la transmission, par le dispositif périphérique de SDN, d'un paquet de LACP envoyé du dispositif de commande de SDN au dispositif de réseau et la négociation avec le dispositif de réseau en vue de déterminer la sélection d'un port ou non sur le dispositif périphérique de SDN du groupe d'agrégation en tant que port sélectionné du groupe d'agrégation.

9. Procédé selon la revendication 7, comprenant en outre :
la réception, par le dispositif périphérique de SDN, d'un paquet de monodiffusion et la transmission du paquet de monodiffusion selon un chemin de transmission de données émis par le dispositif de commande de SDN ;
la réception, par le dispositif périphérique de SDN, d'un paquet de monodiffusion, d'un paquet de multidiffusion ou d'un paquet de diffusion inconnu à partir du dispositif de réseau ou d'un dispositif de SDN dans le SDN ;
lorsque le dispositif périphérique de SDN détermine qu'une stratégie de blocage du paquet de monodiffusion, du paquet de multidiffusion ou du paquet de diffusion inconnu est émise par le dispositif de commande de SDN et qu'un port recevant le paquet de monodiffusion, le paquet de multidiffusion ou le paquet de diffusion inconnu n'est pas configuré en tant que port bloqué, l'envoi, par le dispositif périphérique de SDN, du paquet de monodiffusion, du paquet de multidiffusion ou du paquet de diffusion inconnu selon la configuration locale ;
lorsque le dispositif périphérique de SDN détermine que la stratégie de blocage du paquet de monodiffusion, du paquet de multidiffusion ou du paquet de diffusion inconnu est émise par le dispositif de commande de SDN et que le port destiné à recevoir le paquet de monodiffusion, le paquet de multidiffusion ou le paquet de diffusion inconnu est configuré en tant que port bloqué, ou que le dispositif de commande de SDN n'émet pas la stratégie de blocage du paquet de monodiffusion, du paquet de multidiffusion ou du paquet de diffusion inconnu, l'envoi, par le dispositif périphérique de SDN, du paquet de monodiffusion, du paquet de multidiffusion ou du paquet de diffusion inconnu au dispositif de commande de SDN, la réception de la stratégie de blocage émise par le dispositif de commande de SDN, la configuration du port bloqué du paquet de monodiffusion, du paquet de multidiffusion ou du paquet de diffusion inconnu au niveau local et l'envoi du paquet de monodiffusion, du paquet de multidiffusion ou du paquet de diffusion inconnu.

10. Dispositif comprenant :
une unité de réception, en vue de recevoir des paquets de protocole de commande d'agrégation de liaisons, LACP, appartenant à un même groupe d'agrégation à partir d'un dispositif de réseau en dehors d'un SDN par l'intermédiaire d'un dispositif périphérique de SDN ; et
une unité de traitement, en vue de sélectionner un certain nombre de ports parmi des ports sur le dispositif périphérique de SDN pour recevoir les paquets de LACP en tant que ports sélectionnés du groupe d'agrégation selon une stratégie d'agrégation, et d'envoyer des paquets de LACP au dispositif de réseau par l'intermédiaire d'un dispositif périphérique de SDN en vue d'informer le dispositif de réseau d'une identité du dispositif périphérique de SDN sur lequel se trouvent les ports sélectionnés, de façon à amener le dispositif de réseau à négocier avec le dispositif périphérique de SDN en vue de terminer une agrégation de liaisons.

11. Dispositif selon la revendication 10, dans lequel l'unité de traitement doit en outre sélectionner, lorsque l'unité de réception reçoit les paquets de LACP à partir du dispositif de réseau par l'intermédiaire de dispositifs périphériques de SDN différents, un dispositif périphérique de SDN à partir des dispositifs périphériques de SDN transmettant les paquets de LACP à partir du dispositif de réseau en tant que point de référence central, sélectionner des dispositifs périphériques de SDN se connectant au point de référence central et sélectionner les ports sur les dispositifs périphériques de SDN sélectionnés pour recevoir les paquets de LACP à partir du dispositif de réseau en tant que ports sélectionnés du groupe d'agrégation ;
les paquets de LACP, dont le nombre est le même que celui des ports sélectionnés, étant envoyés à partir de l'unité de traitement et portent le même identifiant système.

12. Dispositif selon la revendication 10, comprenant en outre :
une unité de perception, en vue d'établir si le dispositif périphérique de SDN se déconnecte du SDN et si un port sélectionné du dispositif périphérique de SDN est défaillant ;
dans lequel l'unité de traitement doit en outre informer, lorsque l'unité de perception détermine qu'un port sélectionné est défaillant, le dispositif de réseau que le port défaillant est désélectionné, informer le dispositif périphérique de SDN, sur lequel se trouve le port défaillant sélectionné, en vue de configurer le port défaillant en tant que port non sélectionné, informer, lorsque l'unité de perception détermine que le dispositif périphérique de SDN, sur lequel se trouve un port sélectionné, se déconnecte du SDN, le dispositif de réseau que le port sélectionné sur le dispositif périphérique de SDN se déconnectant du SDN est désélectionné, choisir, lorsque l'unité de perception détermine que le port défaillant se rétablit ou que le dispositif périphérique de SDN se reconnecte au SDN, le port défaillant qui se rétablit ou un port qui se trouve sur le dispositif périphérique de SDN se reconnectant au SDN et recevoir un paquet de LACP à partir du dispositif de réseau en tant que port sélectionné du groupe d'agrégation, informer le dispositif de réseau du dispositif périphérique de SDN, sur lequel se trouve le port sélectionné, avec le paquet de LACP à partir du dispositif, de telle sorte que le dispositif de réseau négocie avec le dispositif périphérique de SDN, sur lequel se trouve le port sélectionné.

13. Dispositif selon la revendication 11, dans lequel
l'unité de traitement doit en outre sélectionner, lorsque le dispositif de réseau détermine qu'un paquet précédent est correctement transmis avec un paquet de protocole MARKER, un dispositif périphérique de SDN à partir des dispositifs périphériques de SDN, sur lesquels se trouvent les ports sélectionnés et transmettre le trafic de données reçu par l'intermédiaire des ports sélectionnés au dispositif périphérique de SDN sélectionné pour une transmission séquentielle.

14. Dispositif comprenant :
une unité de réception, en vue de recevoir des paquets de protocole de commande d'agrégation de liaisons, LACP, à partir d'un dispositif de réseau en dehors d'un réseau défini par logiciel, SDN, et de recevoir des paquets de LACP à partir d'un dispositif de commande de SDN ;
une unité d'émission, en vue de transmettre les paquets de LACP du dispositif de réseau au dispositif de commande de SDN ;
une unité de traitement, en vue de transmettre les paquets de LACP du dispositif de commande de SDN au dispositif de réseau et de négocier avec le dispositif de réseau en vue de terminer l'agrégation de liaisons.

15. Dispositif selon la revendication 14, comprenant en outre :
une unité de perception, en vue d'établir si un port sélectionné du dispositif est défaillant ou si le dispositif se déconnecte du SDN ; dans lequel
l'unité de traitement doit en outre configurer, lorsque l'unité de perception détermine que le port sélectionné est défaillant ou que le dispositif se déconnecte du SDN, le port défaillant en tant que port non sélectionné, recevoir et transmettre, lorsque l'unité de perception détermine que le port défaillant se rétablit ou que le dispositif périphérique de SDN se reconnecte au SDN, un paquet de LACP envoyé du dispositif de commande de SDN au dispositif de réseau et négocier avec le dispositif de réseau en vue de déterminer la sélection du port ou non sur le dispositif du groupe d'agrégation en tant que port sélectionné du groupe d'agrégation.
